# FASCICULE DE BREVET EUROPEEN

(11) **EP 3 323 668 B1**
(45) Date de publication et mention de la délivrance du brevet: **30.06.2021**
(21) Numéro de dépôt: 17201416.9
(22) Date de dépôt: 13.11.2017
(51) Int. Cl.: B60L 3/00, H02J 7/02, B60L 53/14, B60L 53/22, B60L 55/00

(54) **SYSTÈME ET PROCÉDÉ DE COMMANDE D'ALIMENTATION ÉLECTRIQUE SANS INTERRUPTION DOMESTIQUE CONNECTÉE À UN VÉHICULE ÉLECTRIQUE OU HYBRIDE**
SYSTEM UND VERFAHREN ZUR STEUERUNG DER UNTERBRECHUNGSFREIEN STROMVERSORGUNG IM HAUSHALT, DIE MIT EINEM ELEKTRO- ODER HYBRIDFAHRZEUG VERBUNDEN IST
SYSTEM AND METHOD FOR CONTROLLING A HOUSEHOLD UNINTERRUPTIBLE POWER SUPPLY CONNECTED TO AN ELECTRIC OR HYBRID VEHICLE

(30) Priorité: 17.11.2016 FR 1661159
(43) Date de publication de la demande: 23.05.2018
(73) Titulaire: RENAULT s.a.s., 92100 Boulogne-Billancourt (FR)
(72) Inventeur: VENTORUZZO, Géraldine, 94110 ARCUEIL (FR); GOURAUD, Sébastien, 78280 Guyancourt (FR)

(56) Documents cités:
- EP-A1- 2 056 420
- WO-A1-2015/101550
- DE-A1-102014 223 585
- DE-A1-102015 103 278

## Description

L'invention a pour domaine technique les systèmes de charge de véhicule automobile, et plus précisément de tels systèmes de charge comprenant une fonction de réinjection d'énergie.

Aujourd'hui, un véhicule électrique (VE) peut être rechargé par le réseau d'alimentation électrique. Toutefois, le véhicule électrique disposant d'une batterie d'une capacité non négligeable, peut être vu comme un moyen de stockage d'énergie. Ainsi, le véhicule électrique peut également être employé pour réinjecter de l'énergie soit sur le réseau d'alimentation électrique (Vehicle-to-Grid - V2G), soit dans l'installation électrique à laquelle il est relié (Vehicle-to-Home - V2H). Dans ces cas, le véhicule électrique devient à la fois un consommateur d'énergie mais aussi une source d'énergie.

Une des applications envisagées dans ce cadre est l'alimentation, en utilisant l'énergie stockée dans la batterie du véhicule électrique, d'une petite installation électrique lorsqu'il y a une coupure sur le réseau d'alimentation électrique ou bien lorsque la qualité de la tension du réseau d'alimentation électrique est fortement dégradée. On retrouve cette fonctionnalité dans le système commercialisé par Nissan au Japon sous la dénomination anglosaxonne Leaf-to-Home.

Dans ce type de système, une borne bidirectionnelle est installée au sein de l'installation électrique. Cette borne intègre un onduleur bidirectionnel qui permet de charger la batterie du véhicule électrique et aussi de la décharger lorsqu'il existe un besoin d'alimenter les charges de l'installation électrique. Dans ce dernier cas, l'onduleur fonctionne en source de tension (la tension et la fréquence d'alimentation de l'installation électrique sont fixées par celui-ci). Avec ce système, il est également nécessaire d'intégrer à l'installation électrique un organe de découplage permettant de séparer physiquement l'installation électrique du réseau d'alimentation électrique lorsque le véhicule électrique alimente l'installation électrique. Cet organe est indispensable lorsqu'une installation électrique peut fonctionner de manière autonome grâce à la présence de sources locales d'électricité, afin d'éviter l'existence inattendue d'une tension dangereuse sur le réseau d'alimentation électrique, par exemple lors de l'intervention de personnes sur des lignes du réseau suite à une coupure.

Cependant, lorsque l'alimentation du réseau d'alimentation électrique est interrompue, il faut un certain temps pour que l'organe de découplage s'ouvre afin de séparer l'installation électrique du réseau d'alimentation électrique et pour que le chargeur commence à fonctionner en mode source de tension et à alimenter l'installation électrique (typiquement, quelques dizaines de ms pour l'ouverture de l'organe de découplage et quelques secondes pour le démarrage du mode source de tension). La durée entre la perte d'alimentation du réseau d'alimentation électrique et la reprise d'alimentation de l'installation électrique par le véhicule électrique est suffisamment importante pour générer une coupure entraînant l'arrêt de certaines charges.

De l'état de la technique antérieur, on connaît le document US7960857 qui décrit l'utilisation d'un véhicule électrique comme source d'alimentation UPS (acronyme anglophone pour « Uninterruptible Power Source », alimentation sans interruption) d'une charge externe au véhicule. Le véhicule alimente la charge externe avec plusieurs batteries, elle-même supervisée et alimentée si nécessaire par un bus interne DC-DC, son moteur thermique, ou encore par un réseau d'alimentation externe.

Le document DE 10 2015 103278 divulgue un système de charge et de décharge pour véhicule électrique, disposé entre le véhicule et une installation domestique. Le système comporte un convertisseur courant continu/courant alternatif réversible.

Le document DE 10 2014 223 585 divulgue une borne de charge réversible pour véhicule électrique permettant à celui-ci de se charger ou de se décharger aussi bien en courant continu qu'en courant alternatif.

Il existe un besoin pour la commande d'une borne de recharge de véhicule électrique ou hybride, comprenant un mode d'alimentation électrique sans interruption d'une installation électrique avec l'énergie électrique stockée dans la batterie du véhicule, qui ne génère pas de durée entre une perte d'alimentation du réseau d'alimentation électrique et la reprise d'alimentation de l'installation électrique par le véhicule électrique.

L'invention a pour objet un procédé de commande d'un système de commande de l'alimentation électrique d'une installation électrique connectée à un réseau d'alimentation électrique par l'intermédiaire d'une borne de recharge connectée à un véhicule électrique ou hybride,
le système comprenant un premier convertisseur AC-DC relié d'une part au réseau d'alimentation électrique et d'autre part à une batterie du véhicule,
la borne de recharge comprenant un deuxième convertisseur AC-DC connecté à l'installation et à la batterie du véhicule,
la borne de recharge comprenant par ailleurs un interrupteur connecté entre le réseau d'alimentation électrique et l'installation en amont du premier convertisseur AC-DC et du deuxième convertisseur AC-DC,
le véhicule étant relié à la borne de recharge par l'intermédiaire d'au moins une connexion DC.

Le premier convertisseur AC-DC peut être compris dans le véhicule, le véhicule étant connecté à la borne de recharge par au moins une connexion AC.

Le premier convertisseur AC-DC peut être compris dans la borne de recharge.

Le procédé de commande selon l'invention comprend un mode d'alimentation sans interruption au cours duquel on commande l'ouverture de l'interrupteur afin d'alimenter l'installation électrique par le deuxième convertisseur AC-DC,
le deuxième convertisseur AC-DC étant alimenté en énergie soit par le réseau d'alimentation électrique à travers le premier convertisseur AC-DC, soit par la batterie du véhicule,
et au cours duquel lorsque la puissance soutirée au réseau d'alimentation électrique est supérieure à la puissance consommée par l'installation électrique, la batterie est en charge,
et lorsque la puissance soutirée au réseau d'alimentation électrique est inférieure à la puissance consommée par l'installation électrique, la batterie est en décharge,
le procédé de commande comportant également un mode de charge au cours duquel on commande la fermeture de l'interrupteur, de sorte à alimenter l'installation électrique directement par le réseau d'alimentation électrique, et on commande la charge de la batterie par l'intermédiaire d'au moins un des convertisseurs AC-DC.

Le procédé peut comporter également un mode d'injection de puissance, au cours duquel on peut commander la fermeture de l'interrupteur, de sorte à alimenter l'installation électrique directement par le réseau d'alimentation électrique,
on peut commander le premier convertisseur AC-DC de sorte qu'il ne fonctionne pas,
on peut commander le deuxième convertisseur AC-DC de sorte que l'énergie de la batterie soit réinjectée dans l'installation électrique et/ou dans le réseau d'alimentation électrique, en fonction de la puissance soutirée par l'installation électrique.

Pour passer du mode charge ou du mode injection au mode alimentation sans interruption, on peut déterminer la fréquence et la phase du réseau d'alimentation électrique,
on peut commander le deuxième convertisseur de sorte que la tension générée soit synchronisée en fréquence et en phase avec celle du réseau d'alimentation électrique,
puis, une fois le deuxième convertisseur AC-DC synchronisé avec le réseau d'alimentation électrique, on peut commander l'ouverture de l'interrupteur.

Lors du passage du mode charge ou du mode injection au mode alimentation sans interruption, on peut attendre une durée prédéterminée entre la commande du deuxième convertisseur AC-DC et la commande de l'interrupteur.

Un avantage réside dans la possibilité d'activer le mode d'alimentation sans interruption, lorsque la continuité de l'alimentation est souhaitée. L'énergie stockée dans le véhicule est alors utilisée lorsqu'il y a une perte du réseau d'alimentation électrique ou lorsque la puissance consommée par les charges de l'installation électrique est supérieure à la puissance de charge du réseau d'alimentation.

Pour alimenter l'installation électrique, ce sera donc l'énergie provenant du réseau d'alimentation électrique qui sera privilégiée et la batterie du véhicule servira d'appoint.

La batterie du véhicule est donc moins sollicitée par rapport aux systèmes existants ce qui permet de limiter le vieillissement de la batterie et d'être moins contraint par la capacité de stockage de la batterie.

Un autre avantage réside dans l'absence de modification de l'architecture du véhicule par rapport aux véhicules actuels.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments d'un premier mode de réalisation du système de commande de l'alimentation électrique selon l'invention, et
- la figure 2 illustre les principaux éléments d'un deuxième mode de réalisation du système de commande de l'alimentation électrique selon l'invention.

Il existe deux différentes configurations du système selon qu'il y ait ou non un chargeur de batterie intégré au véhicule électrique 2.

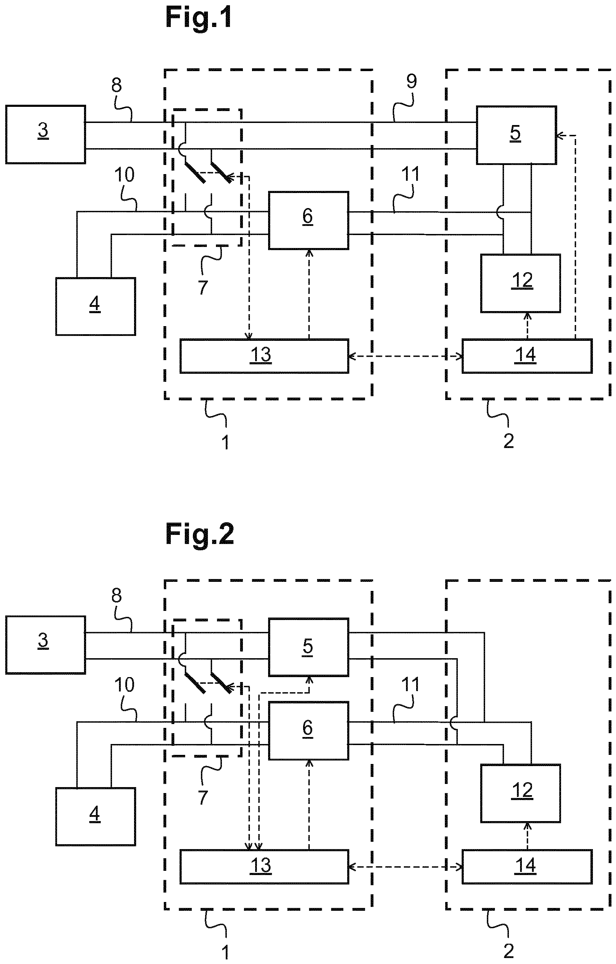

Dans les deux cas, on peut voir sur les figures 1 et 2 que le système de commande de l'alimentation électrique est réparti entre une borne de recharge 1 et un véhicule électrique 2. La borne de recharge 1 est connectée au réseau d'alimentation électrique 3 et à l'installation électrique 4.

La première configuration du système est représentée par la Figure 1.

Dans ce cas, le véhicule électrique 2 possède un premier convertisseur AC-DC (courant alternatif - courant continu) 5 employé comme chargeur embarqué, la borne de recharge 1 comprenant un deuxième convertisseur AC-DC 6. La borne de recharge 1 comprend une première connexion AC (courant alternatif) 8 reliée au réseau d'alimentation électrique 3, une deuxième connexion AC 9 reliée au véhicule électrique 2, une troisième connexion AC 10 reliée aux charges de l'installation électrique 4 et une connexion DC (courant continu) 11 reliée au véhicule électrique 2. Plus précisément, la connexion DC 11 est reliée directement à la batterie 12 du véhicule électrique 2, et la deuxième connexion AC 9 est reliée à la batterie 12 du véhicule électrique 2 par l'intermédiaire du premier convertisseur 5. Par connexion AC, on entend une connexion électrique monophasée ou multiphasée, c'est-à-dire qu'elle comprend au moins une ligne de phase et une ligne de neutre tel qu'illustré.

La borne de recharge 1 comprend par ailleurs un interrupteur 7 permettant de séparer l'installation électrique 4 du réseau d'alimentation électrique 3, disposé entre la première connexion AC 8 et la troisième connexion AC 10. Par interrupteur, l'homme du métier comprendra que le système comprend un moyen de coupure de circuit par phase de la connexion électrique. La figure 1 illustre le cas monophasé comprenant une phase et un neutre, muni chacun d'un moyen de coupure de circuit. Le véhicule électrique 2 est ainsi relié à la borne de recharge 1 par l'intermédiaire de la deuxième connexion AC 9 et de la connexion DC 11. Cette configuration est particulièrement bien adaptée à un connecteur intégrant simultanément une entrée de puissance AC et une entrée de puissance DC.

L'ouverture et la fermeture de l'interrupteur 7 et la commande du deuxième convertisseur AC-DC 6 sont réalisées par le contrôleur 13 de la borne de recharge 1.

La batterie 12 et le bus DC auquel celle-ci est connectée (entre le deuxième convertisseur 6 et le premier convertisseur 5) sont surveillés par le contrôleur 14 du véhicule électrique, qui commande par ailleurs le premier convertisseur 5. La borne de recharge 1 et le véhicule électrique 2 communiquent également entre eux pour échanger entre eux des informations portant par exemple sur une consigne de charge, une vérification du niveau de charge de la batterie, un mode de fonctionnement.

La configuration 1 propose une borne de recharge 1 utilisant dans certains cas, simultanément la prise AC et la prise DC du véhicule électrique 2 pour le transfert d'énergie électrique entre la borne et le véhicule.

La deuxième configuration du système est représentée par la Figure 2. La plupart des éléments sont communs entre les deux configurations et ont les mêmes fonctions, de sorte que les références sont identiques.

On note que, dans la deuxième configuration, le véhicule électrique 2 ne comprend plus le premier convertisseur 5 employé comme chargeur embarqué, ni de connexion AC avec la borne de recharge 1.

La borne de recharge 1 comprend une première connexion AC 8 reliée au réseau d'alimentation électrique 3, une troisième connexion AC 10 reliée aux charges de l'installation électrique 4 et une connexion DC 11 reliée au véhicule électrique 2. La borne de recharge 1 comprend également un premier convertisseur AC-DC 5 connecté entre la première connexion AC 8 et la sortie d'un deuxième convertisseur AC-DC 6, lui-même connecté entre la troisième connexion AC 10 et la connexion DC 11. L'interrupteur 7 permettant de séparer l'installation électrique 4 du réseau d'alimentation électrique 3 est placé entre la première connexion AC 8 et la troisième connexion AC 10. Le contrôleur 13 de la borne de recharge 1 commande les convertisseurs 5 et 6, ainsi que l'ouverture et la fermeture de l'interrupteur 7. Le contrôleur 14 du véhicule électrique 2 surveille la batterie 12. La borne de recharge 1 et le véhicule électrique 2 communiquent entre eux par exemple en prévoyant une connexion filaire ou non filaire.

La configuration 2 propose une borne de recharge 1 comprenant notamment l'interrupteur 7 et deux convertisseurs bidirectionnels AC-DC au lieu d'un seul.

Le système, indépendamment de sa configuration, est commandé par un procédé de commande comprenant trois modes de fonctionnement.

Un premier mode, dit mode ASI, permet de garantir une continuité d'alimentation quels que soient les événements affectant le réseau d'alimentation électrique 3.

Un deuxième mode, dit mode charge, permet de recharger la batterie du véhicule électrique 2, l'installation électrique 4 étant directement alimentée par le réseau d'alimentation électrique 3.

Un troisième mode, dit mode injection, permet de réinjecter de l'énergie du véhicule électrique 2 vers l'installation électrique 4 ou le réseau d'alimentation électrique 4, l'installation électrique 4 étant connectée au réseau d'alimentation électrique 3.

Ces trois modes de fonctionnement vont maintenant être décrits plus en détail.

Dans le premier mode dit mode ASI, l'interrupteur 7 est ouvert. Les charges de l'installation électrique 4 connectées au système sont donc uniquement alimentées par le convertisseur AC-DC 6 de la borne de recharge 1, qui fonctionne comme une source de tension (tension et fréquence fixées par le convertisseur). Lorsque le réseau est présent, la puissance transite du réseau d'alimentation électrique 3 à l'installation électrique 4 en passant par le convertisseur AC-DC 5 puis par le bus DC et enfin par le convertisseur AC-DC 6. Si la puissance soutirée au réseau d'alimentation électrique 3 est supérieure à la puissance consommée par les charges de l'installation électrique 4, alors la batterie 12 est en charge. Si la puissance soutirée au réseau d'alimentation électrique 3 est inférieure à la puissance consommée par les charges de l'installation électrique 4, alors la batterie 12 est en décharge.

S'il y a une coupure sur le réseau d'alimentation électrique 3, l'onduleur 6 continuera à alimenter l'installation électrique 4 à partir uniquement de l'énergie stockée dans la batterie 12. Entre le fonctionnement lorsque le réseau d'alimentation électrique 3 fournit de l'énergie et lorsque le réseau d'alimentation électrique 3 ne fournit pas d'énergie, il n'y a pas de changement de fonctionnement du convertisseur AC-DC 6 et il n'y a pas besoin de séparer l'installation électrique 4 du réseau d'alimentation électrique 3 via un organe de découplage. Il n'y a donc pas de coupure d'alimentation.

Lorsque le mode ASI est activé, étant donné que l'installation électrique est alimentée uniquement via le deuxième convertisseur 6, le système permet, en plus d'assurer la continuité de l'alimentation, de garantir une qualité de la tension optimale dans l'installation électrique en filtrant toutes les perturbations provenant du réseau (harmoniques, creux de tension, flicker, etc.).

Dans le deuxième mode de fonctionnement, dit mode charge, l'interrupteur 7 est fermé. La batterie 12 peut être chargée par le convertisseur 5 et/ou par le convertisseur 6 (s'il est bidirectionnel). L'installation électrique 4 est alimentée directement par le réseau d'alimentation électrique 3.

Dans le troisième mode de fonctionnement, dit mode injection de puissance en parallèle du réseau d'alimentation électrique 3, l'interrupteur 7 est fermé. Le convertisseur 5 n'est pas utilisé. L'installation électrique 4 est directement connectée au réseau d'alimentation électrique 3. La batterie 12 fournit de l'énergie qui est réinjectée dans l'installation électrique 4 et/ou dans le réseau d'alimentation électrique 3. Une fonction de détection de perte du réseau peut être intégrée à ce mode pour détecter la perte d'alimentation par le réseau d'alimentation électrique 3. En effet, s'il y a une perte de réseau, il faut arrêter l'injection de puissance, ce qui entraîne un arrêt de l'alimentation de l'installation électrique 4.

On peut passer du mode charge au mode réinjection sans transition, le convertisseur AC-DC 6 étant utilisé dans les deux cas en source de courant. Par contre, pour passer de l'un de ces deux modes au premier mode ASI, ou inversement, il faut que la tension du convertisseur 6 soit synchronisée en fréquence et en phase avec celle du réseau d'alimentation électrique 3. Une fois le convertisseur 6 synchronisé avec le réseau d'alimentation électrique 3, on peut ouvrir ou fermer l'interrupteur 7. Cette transition se fait sans coupure de l'installation électrique 4.

L'activation du mode ASI implique une temporisation égale à la durée nécessaire à la synchronisation avant que le mode ASI soit actif. Néanmoins, cette temporisation n'implique pas de coupure de l'alimentation.

L'interruption du mode ASI peut être réalisée à l'initiative de l'utilisateur ou de la commande de la borne de recharge 1, si le véhicule électrique 2 n'est plus disponible ou si le niveau de batterie devient faible. Dans ce dernier cas, la borne peut commander le passage en mode charge.

## Revendications

1. Procédé de commande d'un système de commande de l'alimentation électrique d'une installation électrique (4) connectée à un réseau d'alimentation électrique (3) par l'intermédiaire d'une borne de recharge (1) connectée à un véhicule (2) électrique ou hybride,
le système de commande comportant un premier convertisseur AC-DC (5) relié d'une part au réseau d'alimentation électrique (3) et d'autre part à une batterie (12) du véhicule (2),
la borne de recharge (1) comprenant un deuxième convertisseur AC-DC (6) connecté à l'installation électrique (4) et à la batterie (12) du véhicule (2),
la borne de recharge (1) comprenant par ailleurs un interrupteur (7) connecté entre le réseau d'alimentation électrique (3) et l'installation électrique (4) en amont du premier convertisseur AC-DC (5) et du deuxième convertisseur AC-DC (6),
le véhicule (2) étant relié à la borne de recharge (1) par l'intermédiaire d'au moins une connexion DC (11),
le procédé de commande étant **caractérisé par le fait qu'**il comprend un mode d'alimentation sans interruption au cours duquel on commande l'ouverture de l'interrupteur (7) afin d'alimenter l'installation électrique (4) par le deuxième convertisseur AC-DC (6),
le deuxième convertisseur AC-DC (6) étant alimenté en énergie soit par le réseau d'alimentation électrique (3) à travers le premier convertisseur AC-DC (5), soit par la batterie (12) du véhicule (2),
et au cours duquel lorsque la puissance soutirée au réseau d'alimentation électrique (3) est supérieure à la puissance consommée par l'installation électrique (4), la batterie (12) est en charge,
et lorsque la puissance soutirée au réseau d'alimentation électrique (3) est inférieure à la puissance consommée par l'installation électrique (4), la batterie (12) est en décharge,
le procédé de commande comportant également un mode de charge au cours duquel on commande la fermeture de l'interrupteur (7), de sorte à alimenter l'installation électrique (4) directement par le réseau d'alimentation électrique (3), et on commande la charge de la batterie (12) par l'intermédiaire d'au moins un des convertisseurs AC-DC (5,6).

2. Procédé selon la revendication 1, **caractérisé en ce qu'**il comporte également un mode d'injection de puissance au cours duquel on commande la fermeture de l'interrupteur (7), de sorte à alimenter l'installation électrique (4) directement par le réseau d'alimentation électrique (3),
on commande le premier convertisseur AC-DC (5) de sorte qu'il ne fonctionne pas,
on commande le deuxième convertisseur AC-DC (6) de sorte que l'énergie de la batterie (12) soit réinjectée dans l'installation électrique (4) et/ou dans le réseau d'alimentation électrique (3), en fonction de la puissance soutirée par l'installation électrique (4).

3. Procédé selon les revendications 1 et 2, dans lequel, pour passer du mode charge ou du mode injection au mode alimentation sans interruption, on détermine la fréquence et la phase du réseau d'alimentation électrique (3),
on commande le deuxième convertisseur (6) de sorte que la tension générée soit synchronisée en fréquence et en phase avec celle du réseau d'alimentation électrique (3),
puis, une fois le deuxième convertisseur AC-DC (6) synchronisé avec le réseau d'alimentation électrique (3), on commande l'ouverture de l'interrupteur (7).

4. Procédé selon la revendication 3, dans lequel lors du passage du mode charge ou du mode injection au mode alimentation sans interruption, on attend une durée prédéterminée entre la commande du deuxième convertisseur AC-DC (6) et la commande de l'interrupteur (7).

## Patentansprüche

1. Verfahren zur Steuerung eines Steuersystems der Stromversorgung einer elektrischen Anlage (4), die über eine mit einem Elektro- oder Hybridfahrzeug (2) verbundene Aufladestation (1) mit einem Stromversorgungsnetz (3) verbunden ist,
wobei das Steuersystem einen ersten AC-DC-Wandler (5) aufweist, der einerseits mit dem Stromversorgungsnetz (3) und andererseits mit einer Batterie (12) des Fahrzeugs (2) verbunden ist,
wobei die Ladestation (1) einen zweiten AC-DC-Wandler (6) enthält, der mit der elektrischen Anlage (4) und mit der Batterie (12) des Fahrzeugs (2) verbunden ist,
wobei die Ladestation (1) außerdem einen Unterbrecher (7) enthält, der zwischen dem Stromversorgungsnetz (3) und der elektrischen Anlage (4) stromaufwärts vor dem ersten AC-DC-Wandler (5) und dem zweiten AC-DC-Wandler (6) verbunden ist,
wobei das Fahrzeug (2) über mindestens eine DC-Verbindung (11) mit der Ladestation (1) verbunden ist,
wobei das Steuerverfahren **dadurch gekennzeichnet ist, dass** es einen unterbrechungsfreien Versorgungsmodus enthält, während dessen die Öffnung des Unterbrechers (7) gesteuert wird, um die elektrische Anlage (4) durch den zweiten AC-DC-Wandler (6) zu versorgen,
wobei der zweite AC-DC-Wandler (6) entweder über den ersten AC-DC-Wandler (5) durch das Stromversorgungsnetz (3) oder durch die Batterie (12) des Fahrzeugs (2) mit Energie versorgt wird,
und während dessen, wenn die dem Stromversorgungsnetz (3) entnommene Leistung größer als die von der elektrischen Anlage (4) verbrauchte Leistung ist, die Batterie (12) lädt,
und wenn die dem Stromversorgungsnetz (3) entnommene Leistung geringer als die von der elektrischen Anlage (4) verbrauchte Leistung ist, die Batterie (12) entlädt, wobei das Steuerverfahren ebenfalls einen Lademodus aufweist, während dessen das Schließen des Unterbrechers (7) gesteuert wird, um die elektrische Anlage (4) direkt durch das Stromversorgungsnetz (3) zu versorgen, und das Laden der Batterie (12) mittels mindestens eines der AC-DC-Wandler (5, 6) gesteuert wird.

2. Verfahren nach Anspruch 1, **dadurch gekennzeichnet, dass** es ebenfalls einen Modus der Leistungseinspeisung aufweist, während dessen das Schließen des Unterbrechers (7) gesteuert wird, um die elektrische Anlage (4) direkt vom Stromversorgungsnetz (3) zu speisen,
der erste AC-DC-Wandler (5) so gesteuert wird, dass er nicht arbeitet,
der zweite AC-DC-Wandler (6) so gesteuert wird, dass die Energie der Batterie (12) in die elektrische Anlage (4) und/oder das Stromversorgungsnetz (3) rückgespeist wird, abhängig von der durch die elektrische Anlage (4) entnommenen Leistung.

3. Verfahren nach den Ansprüchen 1 und 2, wobei für den Übergang vom Lademodus oder vom Einspeisemodus in den unterbrechungsfreien Versorgungsmodus die Frequenz und die Phase des Stromversorgungsnetzes (3) bestimmt werden, der zweite Wandler (6) so gesteuert wird, dass die erzeugte Spannung in Frequenz und Phase mit derjenigen des Stromversorgungsnetzes (3) synchronisiert wird,
dann, wenn der zweite AC-DC-Wandler (6) mit dem Stromversorgungsnetz (3) synchronisiert ist, die Öffnung des Unterbrechers (7) gesteuert wird.

4. Verfahren nach Anspruch 3, wobei beim Übergang vom Lademodus oder vom Einspeisemodus in den unterbrechungsfreien Versorgungsmodus eine vorbestimmte Dauer zwischen der Steuerung des zweiten AC-DC-Wandlers (6) und der Steuerung des Unterbrechers (7) gewartet wird.

## Claims

1. Control method for controlling a control system for controlling the electrical supply of an electrical installation (4) connected to an electrical power supply network (3) via a recharging terminal (1) connected to an electric or hybrid vehicle (2),
the control system including a first AC-DC converter (5) connected on one hand to the electrical power supply network (3) and on the other hand to a battery (12) of the vehicle (2),
the recharging terminal (1) comprising a second AC-DC converter (6) connected to the electrical installation (4) and to the battery (12) of the vehicle (2),
the recharging terminal (1) comprising in addition a switch (7) connected between the electrical power supply network (3) and the electrical installation (4) upstream of the first AC-DC converter (5) and of the second AC-DC converter (6),
the vehicle (2) being connected to the recharging terminal (1) via at least one DC connection (11),
the control method being **characterized in that** it comprises an uninterruptible power supply mode in which the switch (7) is controlled so as to open in order to supply the electrical installation (4) with power by means of the second AC-DC converter (6),
the second AC-DC converter (6) being supplied with power either by the electrical power supply network (3) through the first AC-DC converter (5) or by the battery (12) of the vehicle (2),
and in which, when the power drawn from the electrical power supply network (3) is greater than the power consumed by the electrical installation (4), the battery (12) charges,
and, when the power drawn from the electrical power supply network (3) is less than the power consumed by the electrical installation (4), the battery (12) discharges,
the control method also including a charging mode in which the switch (7) is controlled so as to close, so as to supply the electrical installation (4) with power directly by means of the electrical power supply network (3), and the battery (12) is controlled so as to charge via at least one of the AC-DC converters (5, 6).

2. Method according to Claim 1, **characterized in that** it also includes a power-injection mode in which the switch (7) is controlled so as to close, so as to supply the electrical installation (4) with power directly by means of the electrical power supply network (3),
the first AC-DC converter (5) is controlled such that it does not operate,
the second AC-DC converter (6) is controlled such that the power from the battery (12) is reinjected into the electrical installation (4) and/or into the electrical power supply network (3), depending on the power drawn by the electrical installation (4).

3. Method according to Claims 1 and 2, wherein, to pass from the charging mode or from the injection mode to the uninterruptible power supply mode, the frequency and phase of the electrical power supply network (3) are determined,
the second converter (6) is controlled such that the generated voltage is synchronized in frequency and in phase with that of the electrical power supply network (3) ,
then, once the second AC-DC converter (6) has been synchronized with the electrical power supply network (3), the switch (7) is controlled so as to open.

4. Method according to Claim 3, wherein, during the passage from the charging mode or from the injection mode to the uninterruptible power supply mode, a predetermined time is waited between the control of the second AC-DC converter (6) and the control of the switch (7).
